# EUROPEAN PATENT SPECIFICATION

(11) **EP 1 836 062 B1**
(45) Date of publication and mention of the grant of the patent: **23.09.2015**
(21) Application number: 05825945.8
(22) Date of filing: 23.12.2005
(51) Int. Cl.: B60D 1/54

(54) **RETRACTABLE TOW HITCH**
EINKLAPPBARE ANHÄNGERKUPPLUNG
ATTELAGE DE REMORQUAGE RETRACTABLE

(30) Priority: 24.12.2004 NL 1027882
(43) Date of publication of application: 26.09.2007
(73) Proprietor: Brink Towing Systems B.V., 7951 CX Staphorst (NL)
(72) Inventor: MARGADANT, Arnoud p/a Brink International B.V., NL-7951 CX Staphorst (NL); VELDMAN, Lefert p/a Brink International, NL-7951 CX Staphorst (NL)
(74) Representative: Geurts, Franciscus Antonius
(86) International application number: PCT/NL2005/000893
(87) International publication number: WO 2006/068479

(56) References cited:
- EP-A- 1 090 782
- EP-A- 1 557 299
- EP-A- 1 557 300
- US-B1- 6 712 381

## Description

The invention relates to a retractable tow hitch for passenger cars in particular.

Various types of retractable tow hitches are known. In general, the retractable tow hitches are movable between a position of use, in which the tow hitch extends rearward from the car, in longitudinal direction of the car, and a position of storage, shielded from the surroundings, extending in a plane substantially transverse to the longitudinal direction of the car.

In one type of retractable tow hitch, disclosed in DE-A-195.21.896, the tow rod is provided with the tow ball at one end and with a nose at the other end. The tow rod is provided with sideward projecting stubs that in the position of use, or operative position, are received in recesses arranged in the lower edge of a vertical sleeve which is fixed to the car. At a location at the side of the stubs facing the ball end, the tow rod is attached to two vertical suspension rods, which are vertically movable. The sleeve is furthermore provided with an aperture for accommodation of the nose. When the tow hitch is to be moved from the position of use to the position of storage, the locking nose is released so as to permit the tow rod to tilt downward with its ball end, the stubs moving out of the recesses and the tow hitch being suspended from the suspension rods. As a result, the tow ball will assume a lowered position, below the level of the bumper of the car. Then the tow hitch is rotated about a vertical axis over 90 degrees, bringing the tow rod into an orientation transverse to the longitudinal direction of the car, in the position of storage. In this position of storage, the tow rod is held in position by suspension from the suspension rods, allowing the tow rod some freedom of movement in a vertical plane perpendicular to the stubs. In addition, in the position of storage, the tow ball remains at a relatively low level.

A further embodiment is disclosed in German patent application 10004523, in which a tow rod provided with a ball is attached to a vertically extending rod, which rod can be rotated about a vertical axis and can be moved up and down by a motor. The lower end of the slidable rod must be moved to a level enabling an unhindered passage underneath the bumper during rotation of the tow hitch between an orientation transverse to the longitudinal axis of the car and a rotation parallel to the longitudinal axis of the car.

In another type of retractable tow hitch, disclosed in German patent application 198 26 618, the tow rod has a vertically extending mounting portion which is accommodated in a vertical housing secured to the car so as to be slidable up and down as well as to be rotatable about a vertical axis over 90 degrees. When being moved by operating means from the position of use to the position of storage, the tow rod is lowered, then rotated about an angle of 90 degrees and finally raised. In order to permit an unimpeded movement of the tow ball underneath the bumper, the distance over which the tow rod is lowered must be rather large, with the same consequences for the length of the tow rod portion and its vertical guide.

European patent application 1.090.782 discloses a retractable tow hitch, which is pulled into the position of use and locked therein by means of an electromotor. After release of the locking, the tow hook can be rotated over 90 degrees, about a horizontal axis parallel to the longitudinal axis of the passenger car, into a horizontal orientation. In that position, the tow hook can be lowered to expose a hinge and then be rotated over 90 degrees about a vertical axis so as to bring the tow hook into engagement with a holder for keeping the tow hook in a position of storage. In a preferred embodiment the whole movement of the tow hook between both positions is carried out by the electromotor.

US 6.712.381 discloses a retractable tow hitch assembly according to the preamble of claim 1.

It is an object of the invention to provide a retractable tow hitch of simple construction.

It is another object of the invention to provide a retractable tow hitch that is easy to be transferred from the position of use to the position of storage and back again, possibly by hand.

From one aspect, the invention provides a tow hitch assembly according to claim 1. Such an embodiment enables a simple build-up of an easy-to-use retractable tow hitch assembly. The tow hitch member can be transferred from a position of use to a position of storage and vice versa by hand, rendering the construction simple and keeping the manufacturing costs low.

In case the first secondary position corresponds to the position of use, the pulling forces exerted on the tow hitch member during use can be taken by the locking device, so that the rotational connection of the tow hitch member to the vehicle can be relieved from those pulling forces to a large extent.

In a further embodiment, the tow hitch member is connected to the holder device for said movement in a non-motorized manner, preferably by hand and by gravity.

This embodiment is in particular low-cost and therefore affordable to many users.

In a further simple embodiment, the holder device comprises a holder member which forms part of the holder parts and is to be fixed -directly or indirectly- to the vehicle, and the tow hitch member is attached to the holder member by means of a hinge having more than one axis of rotation, such as a ball hinge.

For ease of operation, in particular in case the tow hitch member is moved by hand, the ball hinge may be provided with guide edges for guiding the movement of the tow hitch member during said movement.

The tow hitch member may be rotatable with respect to the holder parts or the vehicle about a first axis and about a second axis which is at an angle to the first axis, wherein the first axis has a dominant upward directional component, and is preferably substantially vertical and wherein the second axis has a dominant horizontal directional component and is preferably substantially horizontal.

In another embodiment, of the tow hitch assembly according to the invention, the holder device comprises a holder member which is rotatable with respect to the vehicle about a first axis and the tow hitch member is rotatable with respect to the holder member about a second axis which is at an angle to the first axis. In this embodiment, the rotational connection between tow hitch member and vehicle is built up from two or more rotational connections that may be non-coincident, spaced from one another.

Here too, the first axis may have a dominant upward directional component, and is preferably substantially vertical. Likewise, the second axis may have a dominant horizontal directional component and is preferably substantially horizontal.

The holder member may be elongated and the rotation axis coincides with a longitudinal axis of the elongated holder member.

The holder device may be provided with fourth locking means arranged for locking cooperation with the second locking means and preferably the third locking means for locking the fourth and second locking means to each other in said second secondary orientation of the tow hitch member, wherein, preferably, the fourth locking means provide a positioning means for the tow hitch member in its second secondary orientation.

The first and fourth locking means may be oriented substantially transverse to each other, and/or the first and second secondary orientations of the tow hitch member are substantially transverse to each other, corresponding to the position of use and the position of storage.

In a simple and reliably working structure, the first and fourth locking means comprise holes and the third locking means comprise a locking pin insertable in said holes, wherein preferably the tow hitch bar is provided with a hole forming the second locking means. Such a locking pin is easy to handle.

In all embodiments, the tow hitch member may be attached to the holder device at an inner end of the tow hitch member. In that case the rotational components may be more easily shielded from the rear side of a passenger car, as the distance from the tow hitch ball will be largest here. In addition, such a location distal from the tow hitch ball facilitates the handling of the tow hitch member by hand.

In a further embodiment, in the first secondary orientation the tow hitch ball is located at a higher level than in a second secondary orientation. Usually, in its first secondary orientation the tow hitch member is in its position of use, and in its second secondary orientation the tow hitch member is in its position of storage.

Preferably, the holder device is provided with a holder member, wherein holder member is attached to the holder device so as to be rotatable about a rotation axis, the tow hitch member at an inner end thereof being attached to the holder member so as to be hingeable about a hinge axis substantially transverse to the rotation axis.

In further development of this embodiment, that is stably operable, the holder member is elongated and the rotation axis coincides with a longitudinal axis of the elongated holder member. The hinge axis and the rotation axis may intersect, and/or in the position of use the rotation axis is vertical, and/or the hinge axis is substantially perpendicular to the rotation axis.

Preferably, said locking device comprises a hole in the tow hitch member and a locking pin which is insertable in said hole.

The locking device may comprise a locking member fixedly attached to the vehicle and provided with a hole for passage of the locking pin.

The locking device may be located between the inner end of the tow hitch member and the tow hitch ball.

Said more than one axis may intersect at a location which is stationary in vertical level during said movement.

Preferably, said locking device is located between the inner end of the tow hitch member and the tow hitch ball. The connection between the tow hitch member and the holder device may be a ball hinge. The ball hinge may have a housing fixed to the holder device and a ball secured to the tow hitch rod, wherein the housing is provided with one or more guiding edges for guiding the hinging movement of the ball in the housing. The ball may be connected to the tow hitch bar, preferably the inner end thereof, by a connector, such as a rod, and the housing has guide edges for the connector.

From another aspect, the invention provides a passenger car provided with a tow hitch assembly according to the invention. In a simple embodiment, the car comprises a rear cross beam, wherein the holder device is attached to the rear cross beam. Preferably, in the second secondary orientation, the tow hitch ball is located below the rear cross beam.

The aspects and measures described and/or shown in the application can where possible also be used individually. Said individual aspects and other aspects may be the subject of divisional patent applications related thereto.

The invention will be elucidated on the basis of exemplary embodiments shown in the drawings, in which:
Figure 1 shows a schematic view of an exemplary embodiment of the tow hitch assembly according to the invention, from the rear side;
Figures 1A-C show details, from the rear and from the front, respectively, of the front end of the tow hitch assembly of figure 1;
Figure 2A shows a first stage in the retraction of the tow hook of the tow hitch assembly of figure 1;
Figure 2B shows a second stage in the retraction of the tow hook of the tow hitch assembly of figure 1;
Figure 2C shows a third stage in the retraction of the tow hook of the tow hitch assembly of figure 1;
Figure 2D shows a fourth stage in the retraction of the tow hook of the tow hitch assembly of figure 1;
Figure 2E shows a final, locking stage in the retraction of the tow hook of the tow hitch assembly of figure 1;
Figure 3 shows a second exemplary embodiment of the tow hitch assembly according to the invention, in a side view, in the position of use;
Figures 3A-C show details of the hinge connection of the tow hitch member of the tow hitch assembly of figure 3;
Figure 4 shows the tow hitch assembly of figure 3 in a stage of movement from the position of use towards the position of non-use;
Figure 4A shows a detail of figure 4;
Figure 5 shows the tow hitch assembly of figure 3 in a further stage of movement from the position of use towards the position of non-use; and
Figure 6 shows the tow hitch assembly of figure 3 in yet a further stage of movement from the position of use towards the position of non-use.

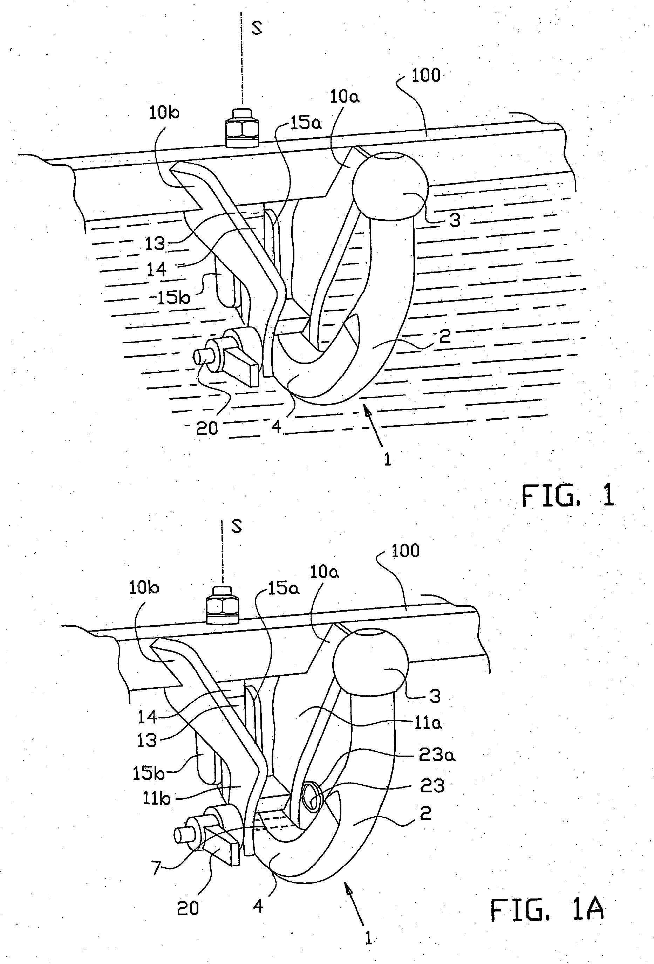

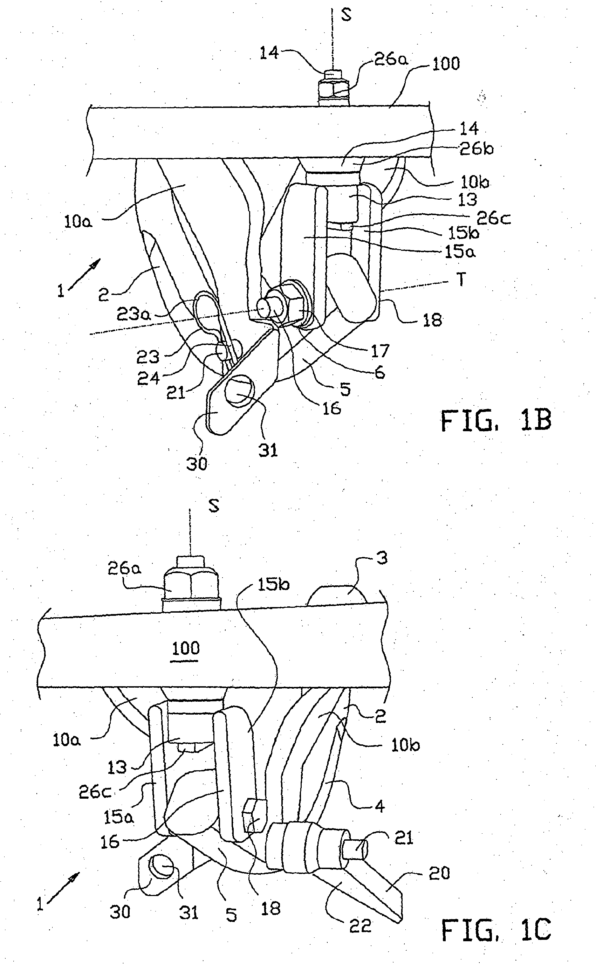

In figure 1 the tow hitch assembly 1 according to the invention includes a cross beam or bar 100 which is to be attached to the chassis of a passenger car (not shown) and forms part of a holder device for a tow hitch member 2.

The tow hitch assembly 1 thus comprises a tow hook (tow hitch member) 2, which at its outer end is provided with a ball 3 which forms a unity with a tow bar or rod 4, which serves to attach the tow hook 2 to fastening means attached to the cross beam or bar 100 and to transfer towing forces exerted on the ball 3 to the cross beam 100 and through the cross beam 100 to the chassis of the vehicle.

As can be seen in figures 1B and 1C, a short vertical rod 14 has been attached to the cross beam 100. The rod 14 is attached to the cross beam 100 in a rotary-fixed manner by means of nuts 26a and 26b and locking rings (not shown).

A sleeve or ring 13 has been mounted on a lower portion of the vertical rod 14 extending below the cross beam 100, so as to be freely rotatable about an axis S of the vertical rod 14, supported by nut 26c which is locked on rod 14 (figure 1B).

Two vertical plates 15a, 15b form one fixed unity with the sleeve ring 13, so as to be rotatable therewith about axis S, and form a generally inverted U-shaped member with the sleeve or ring 13.

At their lower end, the plates 15a, 15b have been provided with aligned holes, through which a horizontally oriented bolt 16 extends, fastened to the plates 15a,b by means of nut 17 and bolt head 18.

The tow bar 4 has an outer inner end 5, which is provided with a horizontally extending bore or hole 6. As can be seen in figures 1B and 1C, the bolt 16 extends through the hole 6, the tow bar inner end 5 being in part accommodated within a space formed between the plates 15a, 15b. The connection of the tow bar inner end 5 to the plates 15a, 15b by means of the bolt 16 is such that the tow bar 4 is rotatable about an axis T of bolt 16 in a vertical plane, with respect to the plates 15a, 15b.

As can be seen in all figures, at the rear side of the vertical rod 14 two inclined plates 10a, 10b have been secured by welding to the cross beam 100 and define a generally V-shaped space. At their lower ends, the plates 10a, 10b merge into vertical and parallel lower plate ends 11a, 11b, which are spaced apart so as to enable the accommodation of the tow bar 4 in between them.

The lower end plates 11a, 11b have been provided with aligned holes 12a,b, for accommodation of a locking pin 21 of a locking member 20, as can be seen in figure 1A. The locking member 20 has been provided with a handle 22 at one end, and with a locking groove 24 at its other end, vide figure 1B. A locking spring clamp 23 has been slid transversely over this outer end of the pin 21, accommodated in the groove 24, so that the locking pin 21 is secured against removal.

At a distance from its inner end 5 the tow bar 4 has been provided with a transverse hole 7, which is dimensioned to closely receive the pin 21 when aligned with the holes 12a,b.

As can be seen in figures 1B and 1C, the lower plate 11a has been provided with a plate 30, that is oriented in a vertical plane and, considered in the horizontal plane, is at an angle of 90 degrees to the lower plate 11a. The plate 30 slopes downward at an angle of approximately 45 degrees, and is provided with a hole 31, which is dimensioned to closely receive the pin 21, as will be discussed later.

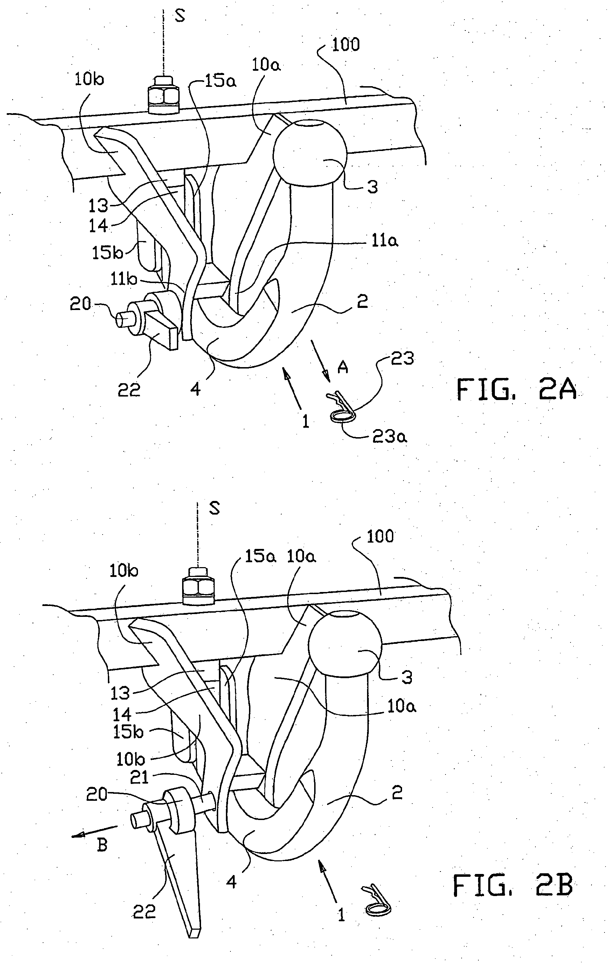

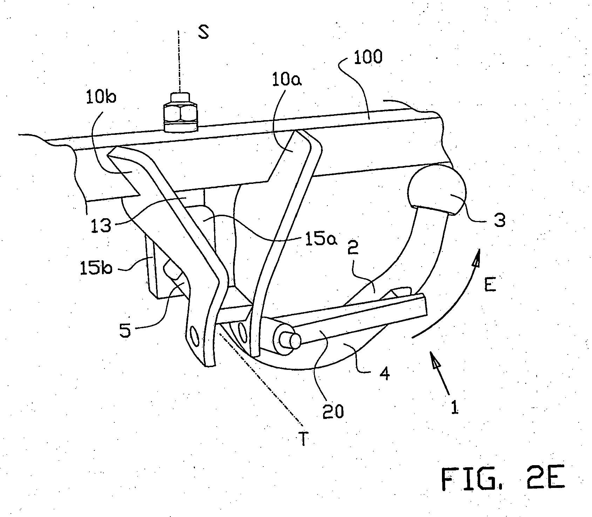

In case the user wants to transfer the tow hitch assembly 1 from the position of use depicted in figure 1 to the retracted position of storage depicted in figure 2E, he takes the ring 23a of locking wire 23 and pulls the locking clamp 23 towards him, so as to release it from the groove 24 and from the outer end of the pin 21 (figure 2A).

He then takes the handle 22 of locking member 20, to pull the pin 21 out of the holes 12a, 12b of the lower plates 11a, 11b and hole 7 of the tow bar 4 (figure 2B).

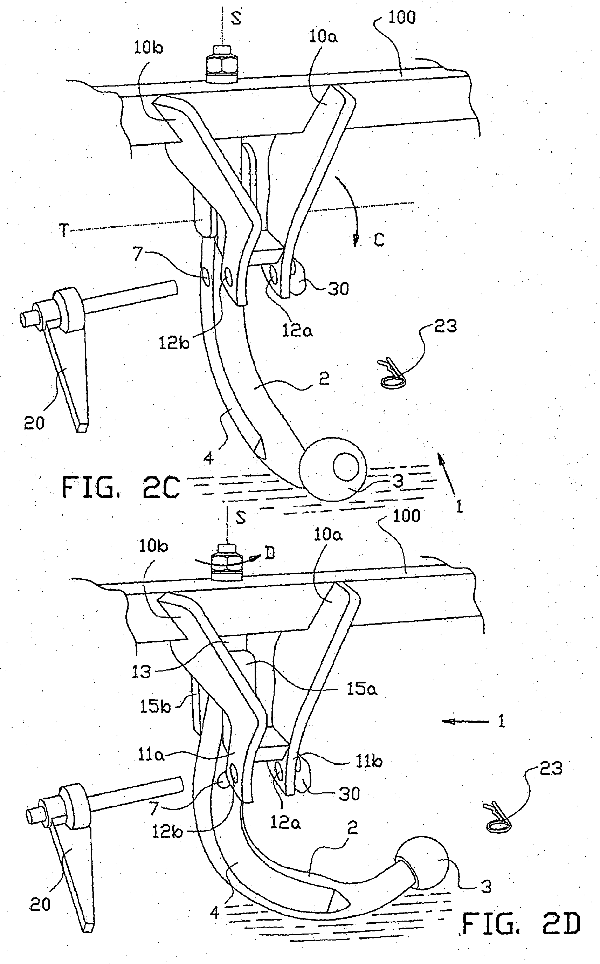

Then the tow bar 4 is attached to the rear cross beam 100 (indirectly) at its inner end 5 by hinge pin 16 only. As a consequence, the tow bar 4 will be able to cant freely downwards in direction C (figure 2C), to a position in which the tow hook 2 rests on a sub surface, in particular the pavement.

In that position, the user can easily take the ball 3 so as to move the tow hook 2 to the position in figure 2D, transverse to the longitudinal axis of the car, in which movement (arrow D) the inner end 5 of the tow bar 4 will be rotated about vertical axis S, about an angle of 90 degrees.

Then the user puts his hand below the tow bar 4 and urges the tow hook 2 upward in direction E into the position depicted in figure 2E, in which the tow bar 4 is adjacent the plate 30. The user ensures that the hole 7 is aligned with the hole 31 in plate 30, and then takes the handle 22 of locking member 20, and inserts the pin 21 into, first, hole 7 of tow bar 4 and then into hole 31 of plate 30. The plate 30 may serve as an abutment for tow rod 4 preventing further rotation of the tow rod 4 about the axis S during the insertion of the pin 21. Finally, he takes the clamping wire 23 by its ring 23a, and places the clamping wire 23 on the pin 21 again, after which it is clampingly accommodated in groove 24 of the pin end to lock the pin end. The tow hook 2 is then secured in the position of storage, parallel to the cross beam 100.

As can be seen in figures 2A and 2E the level of the ball 3 in the position of storage is lower than the level of the ball 3 in the position of use, which is realised by a suitable location of_hole 31 and by suitable location and dimensions of the plate 30.

In case the user wants to use the tow hitch assembly 1 again, the aforementioned steps are executed in reverse order.

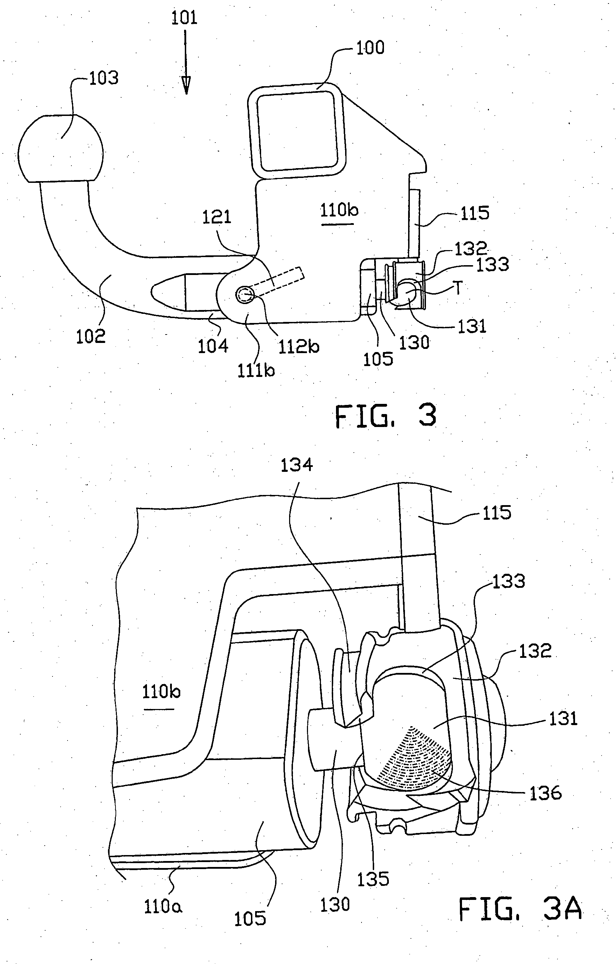

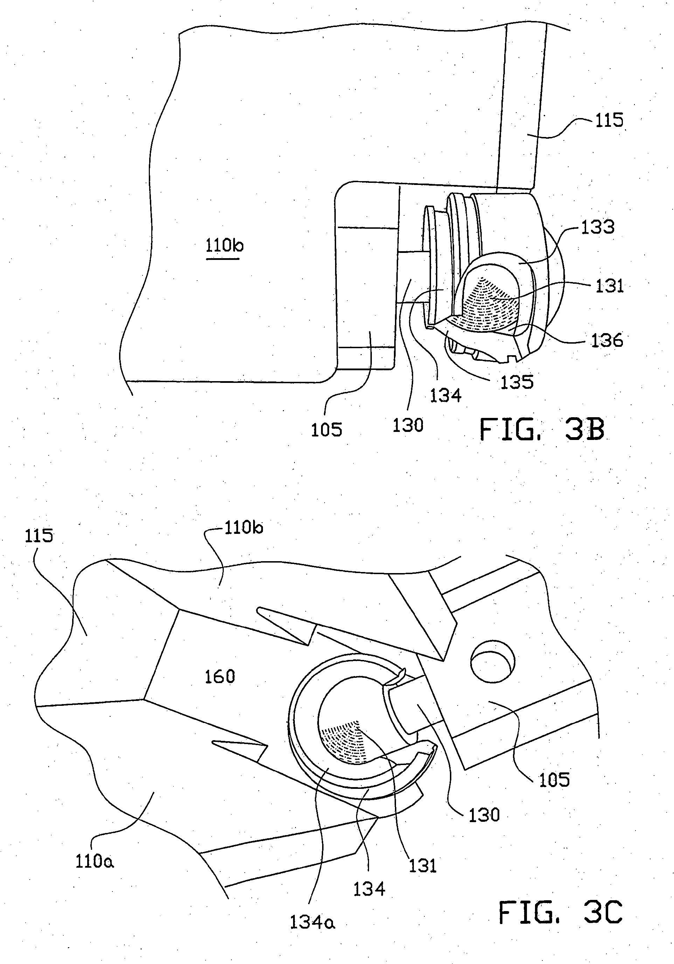

The second exemplary embodiment of a tow hitch assembly according to the invention, depicted in figures 3-6, comprises a tow hitch assembly 101, attached to a cross bar 100 which is to be secured to a vehicle (further not shown). Two vertical plates 110a,b have been fixedly secured to the beam 100. The plates 110a,b define a vertical space 160 in which tow hitch member 102 can be accommodated, in the position of use depicted in figure 3.

Tow hitch member 102 comprises a tow hitch ball 103 and a tow bar 104 having an inner end 105. Halfway, the tow bar 104 has been provided with a transverse through-hole 107, which hole 107 can be aligned with holes 112a,b in vertical plates 110a,b. In order to secure the tow hitch member 2 in the position of use, a pin 121 is inserted through the holes 112a,b and 107 and secured in that position, in a manner not shown but similar to the securing of the pin 21 in the previous example.

At their front edges, the plates 110a,b are connected to each other by a transverse, vertical plate 115. A bearing housing 132 is fixedly attached to the plate 115, and defines (vide figures 3A-C) a housing for bearing ball 131, which is fixedly attached to the inner end 105 of tow bar 104 via neck 130.

In the position of use, vide also figure 3B, the neck or rod 130 extends through a rearward directed opening 134 of bearing housing 132. The opening 134 is limited by flanged edge 134a, which extends in a vertical plane, perpendicular to the neck 130.

As can be seen in figures 3A and 3C, the edge 134a is interrupted to leave a passage 135 free. The passage 135 merges into opening 136 in the bearing housing 132, which opening 136 is limited by edge 133.

Fixed to the plate 110a, perpendicular thereto, is a plate 150, which is provided with a hole 151, for accommodation of the pin 121 for storing the tow bar 104 in the position of non-use.

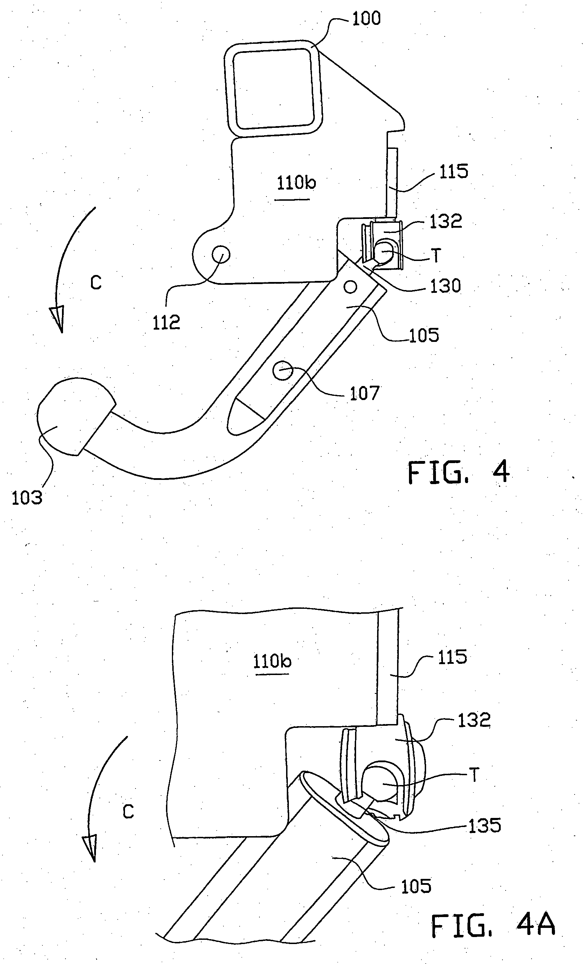

In order to transfer the tow bar 104 from the position of use of figure 3, via the intermediate positions depicted in figures 4, 5 and 6, to a position of non-use (not shown), the user removes the locking pin 121, as a result of which the tow bar 4 will fall downward in direction C. In this movement, the neck 130 passes through the opening 135, the tow bar 4 rotating about a horizontal axis T through the centre of the ball bearing 131/132, guided by the side plates 110a,b. This motion of the tow bar 104 can take place under the influence of gravity due to the tow bars 4 own weight.

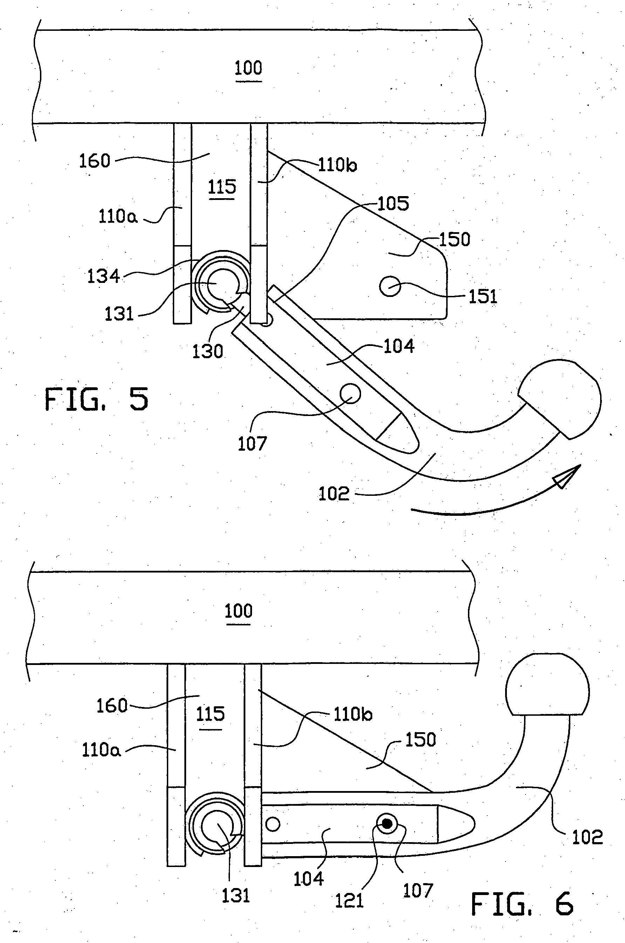

The opening 136 allows the tow bar 4 to cant downwards until the tow bar 104 hits the ground. Then, the user can grasp the tow bar 104, and rotate it about, for instance a vertical axis through the centre of the ball bearing 131/132 to a position below the locking plate 150 (figure 6), and then upwards to bring the hole 107 in line with the hole 151, after which the locking pin 121 can be inserted and secured to lock the tow bar 104 in the position of non-use.

The ball bearing 131/132 permits various other directions of movement, for instance a combined rotation about a vertical axis and a rotation about a horizontal axis T which rotates together with the ball 131.

As can be seen, all movements and locking and unlocking actions can be performed by hand (from the outside of the car), rendering the tow hitch assembly discussed simple in construction and therefore of low cost.

The tow hitch assembly according to the invention, including the parts for its operation/movement, is located outside the car with all its components, so that no particular provisions inside the car need to be made for mounting and operating the tow hitch assembly.

## Claims

1. Tow hitch assembly (1;101) comprising a tow hitch member (2;102) having a tow hitch rod (4;104) and a tow hitch ball (3;103), and a holder device (100,15;115) for the tow hitch member, wherein the holder device comprises holder parts (100) which are to be fixedly secured to the vehicle, such as a passenger car, wherein the tow hitch member (2;102) is connected to the holder device so as to be rotatable about more than one axis (S,T) for movement with respect to the holder parts and the vehicle between a primary orientation in which the tow hitch ball (3; 103) has a low position and at least a first secondary orientation and a second secondary orientation in which the tow hitch ball has a higher position, the assembly further comprising a locking device for locking the tow hitch member in at least said first secondary orientation, wherein the locking device is provided with operation means for locking and/or unlocking the locking device by hand, **characterized in that** said more than one axis intersect at a location which is stationary in vertical level during said movement, said locking device being located between the inner end of the tow hitch member and the tow hitch ball, in particular at a location along the tow hitch rod, wherein the locking device (21;121) comprises first locking means (12;112) which are fixed to the holder device, wherein the first locking means comprise two plates (10;110) fixedly secured to the holder parts, wherein the plates leave an upward passage free for movement of the tow hitch member (2;110) towards and away from the first secondary position, wherein the tow hitch member (2;102) is provided with second locking means (7;107), wherein the assembly is furthermore provided with third locking means (21;121) for locking the first and second locking means to each other in said first secondary orientation of the tow hitch member.

2. Tow hitch assembly (1;101) according to claim 1, wherein the tow hitch member (2;102) is connected to the holder device (100) for said movement in a non-motorized manner, preferably by hand and by gravity.

3. Tow hitch assembly (101) according to claim 1 or 2, wherein the holder device (100;115) comprises a holder member (115) which forms part of the holder parts (100) and is to be fixedly secured to the vehicle, and the tow hitch member (2;102) is attached to the holder member by means of a hinge (131,132) having more than one axis (S,T) of rotation.

4. Tow hitch assembly (101) according to claim 3, wherein the hinge (131,132) is a ball hinge.

5. Tow hitch assembly (101) according to claim 4, wherein the ball hinge (131,132) is provided with guide edges (133) for guiding the movement of the tow hitch member (102) during its movement.

6. Tow hitch assembly (1;101) according to any one of the preceding claims, wherein the tow hitch member (2;102) is rotatable with respect to the holder parts (100) about a first axis (S) and about at least one second axis (T) which is at an angle to the first axis, wherein the first axis (S) has a dominant upward directional component, and is preferably substantially vertical and wherein the second axis (T) has a dominant horizontal directional component and is preferably substantially horizontal.

7. Tow hitch assembly (101) according to claim 6, wherein there are at least two second axes (T), which extend transverse to each other.

8. Tow hitch assembly (1) according to claim 1, wherein the holder device (100,15) comprises a holder member (15) which is rotatable with respect to the holder parts (100) about a first axis (S) and the tow hitch member (2) is rotatable with respect to the holder member (15) about a second axis (T) which is at an angle to the first axis (S).

9. Tow hitch assembly (1) according to claim 8, wherein the first axis (S) has a dominant upward directional component, and is preferably substantially vertical.

10. Tow hitch assembly (1) according to claim 8 or 9, wherein the second axis (T) has a dominant horizontal directional component and is preferably substantially horizontal.

11. Tow hitch assembly (1) according to claim 8, 9 or 10, wherein the holder member (15) is elongated and wherein the rotation axis (S) coincides with a longitudinal axis of the elongated holder member.

12. Tow hitch assembly (1;101) according to any of the preceding claims, wherein the holder device (100,15;115) is provided with fourth locking means (30;151) arranged for locking cooperation with the second locking means (7;107) and preferably the third locking means (21;121) for locking the fourth and second locking means to each other in said second secondary orientation of the tow hitch member, wherein, preferably, the fourth locking means provide a positioning means for the tow hitch member in its second secondary orientation.

13. Tow hitch assembly (1;101) according to claim 12, wherein the first locking means (12;112) and fourth locking means (30;131) are oriented substantially transverse to each other.

14. Tow hitch assembly according to claim 12 or 13, wherein the first and second secondary orientations of the tow hitch member are substantially transverse to each other.

15. Tow hitch assembly (1;101) according to any one of the claims 11-14, wherein the first locking means (12;112) and fourth locking means (30;151) comprise holes and the third locking means comprise a locking pin (21;121) insertable in said holes, wherein preferably the tow hitch bar (4;104) is provided with a hole forming the second locking means.

16. Tow hitch assembly (1;101) according to any one of the preceding claims, wherein the tow hitch member (2;102) is movably connected to the holder device at an inner end (105) of the tow hitch member.

17. Tow hitch assembly (1;101) according to any one of the preceding claims, wherein in the first secondary orientation the tow hitch ball (3;103) is located at a higher level than in a second secondary orientation.

18. Tow hitch assembly (1;101) according to any one of the preceding claims, wherein in its first secondary orientation the tow hitch member (2;102) is in its position of use.

19. Tow hitch assembly (1;101) according to any one of the preceding claims, wherein in its second secondary orientation the tow hitch member (2;102) is in its position of storage.

20. Tow hitch assembly (1) according to any one of the preceding claims, wherein the holder device (100,15) is provided with a holder member (15), wherein holder member is attached to the holder device so as to be rotatable about a rotation axis (S), the tow hitch member (2) at an inner end thereof being attached to the holder member (15) so as to be hingeable about a hinge axis (T) substantially transverse to the rotation axis (S).

21. Tow hitch assembly (1) according to claim 20, wherein the holder member (15) is elongated and wherein the rotation axis (S) coincides with a longitudinal axis of the elongated holder member.

22. Tow hitch assembly (1) according to claim 20 or 21, wherein the hinge axis (T) and the rotation axis (S) intersect.

23. Tow hitch assembly (1) according to claim 20, 21 or 22, wherein in the position of use the rotation axis (S) is vertical.

24. Tow hitch assembly according to any one of the claims 20-23, wherein the hinge axis (T) is substantially perpendicular to the rotation axis (S).

25. Tow hitch assembly (1;101) according to any one of the preceding claims, wherein said locking device (21;121) comprises a hole (7;107) in the tow hitch member and a locking pin (21; 121) which is insertable in said hole.

26. Tow hitch assembly according to claim 25, wherein the locking device (21;121) comprises a locking member (10;150) fixedly attached to the vehicle and provided with a hole (12;112) for passage of the locking pin.

27. Tow hitch assembly (1;101) according to claim 25 or 26, said locking device being located between the inner end of the tow hitch member and the tow hitch ball.

28. Tow hitch assembly (1;101) according to claim 25, 26 or 27, wherein said more than one axis (S,T) intersect at a location which is stationary in vertical level during said movement.

29. Tow hitch assembly (101) according to any one of the preceding claims, wherein the connection between the tow hitch member (102) and the holder device (115) is a ball hinge.

30. Tow hitch assembly (101) according to claim 4 or 5, wherein the ball hinge (131,132) has a housing (132) fixed to the holder device (100,115) and a ball (131) secured to the tow hitch rod (104), wherein the housing (132) is provided with one or more guiding edges (133) for guiding the hinging movement of the ball in the housing.

31. Tow hitch assembly (101) according to claim 30, wherein the ball (131) is connected to the tow hitch bar (104), preferably the inner end (105) thereof, by a connector (130), such as a rod, and the housing has guide edges for the connector (130).

32. Passenger car provided with a tow hitch assembly (1;101) according to any one of the preceding claims.

33. Passenger car according to claim 32, comprising a rear cross beam (100), wherein the holder device (15;115) is attached to the rear cross beam.

34. Passenger car according to claim 32 or 33, wherein in the second secondary orientation, the tow hitch ball (3;103) is located below the rear cross beam (100).

## Patentansprüche

1. Anhängerkupplungsanordnung (1; 101), umfassend ein Anhängerkupplungselement (2; 102), welches eine Anhängestange (4; 104) und einen Anhängekugelkopf (3; 103) aufweist, und eine Halterung (100, 15; 115) für das Anhängerkupplungselement, wobei die Halterung Halterungsteile (100) umfasst, welche an dem Fahrzeug, beispielsweise einem Personenkraftwagen, starr zu befestigen sind, wobei das Anhängerkupplungselement (2; 102) mit der Halterung derart verbunden ist, dass es um mehr als eine Achse (S, T) drehbar ist, um bezüglich der Halterungsteile und des Fahrzeugs zwischen einer Primärorientierung, in welcher der Anhängekugelkopf (3; 103) eine niedrige Position einnimmt, und mindestens einer ersten Sekundärorientierung und einer zweiten Sekundärorientierung, in welchen der Anhängekugelkopf (3; 103) eine höhere Position einnimmt, bewegt werden zu können, wobei die Anordnung ferner eine Verriegelungsvorrichtung zum Verriegeln des Anhängerkupplungselements zumindest in der ersten Sekundärorientierung umfasst, wobei die Verriegelungsvorrichtung mit einem Bedienelement zum Verriegeln und/oder Entriegeln der Verriegelungsvorrichtung von Hand versehen ist, **dadurch gekennzeichnet, dass** diese mehr als eine Achse sich in einer Stelle schneiden, welche im Vertikalniveau während dieser Bewegung stationär ist, wobei diese Verriegelungsvorrichtung zwischen dem inneren Ende des Anhängerkupplungselements und dem Anhängekugelkopf, insbesondere an einer Position entlang der Anhängestange, angeordnet ist, wobei die Verriegelungsvorrichtung (21; 121) ein an der Halterung fixiertes erstes Verriegelungsmittel (12; 112) aufweist, wobei das erste Verriegelungsmittel zwei Platten (10; 110) aufweist, welche an den Halterungsteilen starr befestigt sind, wobei die Platten einen Aufwärtsdurchgang zum Bewegen des Anhängerkupplungselements (2; 110) auf die erste Sekundärposition zu und von dieser weg frei lassen, wobei das Anhängerkupplungselement (2; 102) mit einem zweiten Verriegelungsmittel (7; 107) versehen ist, wobei die Anordnung ferner mit einem dritten Verriegelungsmittel (21; 121) zum Verriegeln des ersten und zweiten Verriegelungsmittels miteinander in der ersten Sekundärorientierung des Anhängerkupplungselements versehen ist.

2. Anhängerkupplungsanordnung (1; 101) gemäß Anspruch 1, wobei das Anhängerkupplungselement (2; 102) mit der Halterung (100) derart verbunden ist, dass dieses Bewegen in einer nicht motorisierten Weise, bevorzugt von Hand oder mittels Schwerkraft, erfolgen kann.

3. Anhängerkupplungsanordnung (101) gemäß Anspruch 1 oder 2, wobei die Halterung (100; 115) ein Halterungselement (115) umfasst, welches einen Teil der Halterungsteile (100) bildet und starr an dem Fahrzeug zu befestigen ist, und das Anhängerkupplungselement (2; 102) an dem Halterungselement mittels eines Scharniers (131, 132) angebracht ist, welches mehr als eine Drehachse (S, T) aufweist.

4. Anhängerkupplungsanordnung (101) gemäß Anspruch 3, wobei das Scharnier (131, 132) ein Kugelscharnier ist.

5. Anhängerkupplungsanordnung (101) gemäß Anspruch 4, wobei das Kugelscharnier (131, 132) mit Führungskanten (133) versehen ist, um die Bewegung des Anhängerkupplungselements (102) während seiner Bewegung zu führen.

6. Anhängerkupplungsanordnung (1; 101) gemäß einem der vorhergehenden Ansprüche, wobei das Anhängerkupplungselement (2; 102) bezüglich der Halterungsteile (100) um eine erste Achse (S) und um mindestens eine zweite Achse (T), welche zur ersten Achse einen Winkel aufweist, drehbar ist, wobei die erste Achse (S) eine im Wesentlichen aufwärts gerichtete Komponente aufweist und vorzugsweise im Wesentlichen vertikal angeordnet ist und wobei die zweite Achse (T) eine im Wesentlichen horizontal gerichtete Komponente aufweist und vorzugsweise im Wesentlichen horizontal angeordnet ist.

7. Anhängerkupplungsanordnung (101) gemäß Anspruch 6, wobei es mindestens zwei zweite Achsen (T) gibt, welche sich quer zueinander erstrecken.

8. Anhängerkupplungsanordnung (1) gemäß Anspruch 1, wobei die Halterung (100, 15) ein Halterungselement (15) aufweist, welches bezüglich der Halterungsteile (100) um eine erste Achse (S) drehbar ist, und wobei das Anhängerkupplungselement (2) bezüglich des Halterungselements (15) um eine zweite Achse (T), welche zur ersten Achse (S) einen Winkel aufweist, drehbar ist.

9. Anhängerkupplungsanordnung (1) gemäß Anspruch 8, wobei die erste Achse (S) eine im Wesentlichen aufwärts gerichtete Komponente aufweist und vorzugsweise im Wesentlichen vertikal angeordnet ist.

10. Anhängerkupplungsanordnung (1) gemäß Anspruch 8 oder 9, wobei die zweite Achse (T) eine im Wesentlichen horizontal gerichtete Komponente aufweist und vorzugsweise im Wesentlichen horizontal angeordnet ist.

11. Anhängerkupplungsanordnung (1) gemäß Anspruch 8, 9 oder 10, wobei das Halterungselement (15) langgestreckt ist und wobei die Drehachse (S) mit einer Längsachse des langgestreckten Halterungselements zusammenfällt.

12. Anhängerkupplungsanordnung (1; 101) gemäß einem der vorhergehenden Ansprüche, wobei die Halterung (100, 15; 115) mit einem vierten Verriegelungsmittel (30; 151) versehen ist, welches zum verriegelnden Zusammenwirken mit dem zweiten Verriegelungsmittel (7; 107) und vorzugsweise dem dritten Verriegelungsmittel (21; 121) zum Verriegeln des vierten und des zweiten Verriegelungsmittels miteinander in dieser zweiten Sekundärorientierung des Anhängerkupplungselements vorgesehen ist, wobei vorzugsweise das vierte Verriegelungsmittel eine Einstellvorrichtung für das Anhängerkupplungselement in seiner zweiten Sekundärorientierung bereitstellt.

13. Anhängerkupplungsanordnung (1; 101) gemäß Anspruch 12, wobei das erste Verriegelungsmittel (12; 112) und das vierte Verriegelungsmittel (30; 131) im Wesentlichen quer zueinander angeordnet sind.

14. Anhängerkupplungsanordnung gemäß Anspruch 12 oder 13, wobei die erste und zweite Sekundärorientierung des Anhängerkupplungselements im Wesentlichen quer zueinander angeordnet sind.

15. Anhängerkupplungsanordnung (1; 101) gemäß einem der Ansprüche 11-14, wobei das erste Verriegelungsmittel (12; 112) und das vierte Verriegelungsmittel (30; 151) Löcher aufweisen und das dritte Verriegelungsmittel einen in diese Löcher einführbaren Sperrbolzen (21; 121) aufweist, wobei vorzugsweise die Anhängestange (4; 104) mit einem Loch versehen ist, welches das zweite Verriegelungsmittel bildet.

16. Anhängerkupplungsanordnung (1; 101) gemäß einem der vorhergehenden Ansprüche, wobei das Anhängerkupplungselement (2; 102) mit der Halterung an einem inneren Ende (105) des Anhängerkupplungselements bewegbar verbunden ist.

17. Anhängerkupplungsanordnung (1; 101) gemäß einem der vorhergehenden Ansprüche, wobei der Anhängekugelkopf (3; 103) in der ersten Sekundärorientierung in einem höheren Niveau als in einer zweiten Sekundärorientierung angeordnet ist.

18. Anhängerkupplungsanordnung (1; 101) gemäß einem der vorhergehenden Ansprüche, wobei sich das Anhängerkupplungselement (2; 102) in seiner ersten Sekundärorientierung in seiner Anwendungsposition befindet.

19. Anhängerkupplungsanordnung (1; 101) gemäß einem der vorhergehenden Ansprüche, wobei sich das Anhängerkupplungselement (2; 102) in seiner zweiten Sekundärorientierung in seiner Ruheposition befindet.

20. Anhängerkupplungsanordnung (1) gemäß einem der vorhergehenden Ansprüche, wobei die Halterung (100, 15) mit einem Halterungselement (15) versehen ist, wobei das Halterungselement an der Halterung derart angebracht ist, dass es um eine Drehachse (S) drehbar ist, wobei das Anhängerkupplungselement (2) an dessen inneren Ende an dem Halterungselement (15) derart angebracht ist, dass es um eine im Wesentlichen quer zur Drehachse (S) angeordnete Scharnierachse (T) schwenkbar ist.

21. Anhängerkupplungsanordnung (1) gemäß Anspruch 20, wobei das Halterungselements (15) langgestreckt ist und wobei die Drehachse (S) mit einer Längsachse des langgestreckten Halterungselements zusammenfällt.

22. Anhängerkupplungsanordnung (1) gemäß Anspruch 20 oder 21, wobei sich die Scharnierachse (T) und die Drehachse (S) schneiden.

23. Anhängerkupplungsanordnung (1) gemäß Anspruch 20, 21 oder 22, wobei die Drehachse (S) in der Verwendungsposition vertikal ausgerichtet ist.

24. Anhängerkupplungsanordnung gemäß einem der Ansprüche 20-23, wobei die Scharnierachse (T) im Wesentlichen senkrecht zur Drehachse (S) angeordnet ist.

25. Anhängerkupplungsanordnung (1; 101) gemäß einem der vorhergehenden Ansprüche, wobei die Verriegelungsvorrichtung (21; 121) ein Loch (7; 107) im Anhängerkupplungselement und einen Sperrbolzen (21; 121) umfasst, welcher in dieses Loch eingeführt werden kann.

26. Anhängerkupplungsanordnung gemäß Anspruch 25, wobei die Verriegelungsvorrichtung (21; 121) ein Verriegelungselement (10; 150) umfasst, welches an dem Fahrzeug starr angebracht ist und mit einem Loch (12; 112) zum Durchlass des Sperrbolzens versehen ist.

27. Anhängerkupplungsanordnung (1; 101) gemäß Anspruch 25 oder 26, wobei diese Verriegelungsvorrichtung zwischen dem inneren Ende des Anhängerkupplungselements und dem Anhängekugelkopf angeordnet ist.

28. Anhängerkupplungsanordnung (1; 101) gemäß Anspruch 25, 26 oder 27, wobei die mehr als eine Achse (S, T) sich an einer Stelle, deren Vertikalniveau während der Bewegung stationär bleibt, schneiden

29. Anhängerkupplungsanordnung (101) gemäß einem der vorhergehenden Ansprüche, wobei die Verbindung zwischen dem Anhängerkupplungselement (102) und der Halterung (115) ein Kugelscharnier ist.

30. Anhängerkupplungsanordnung (101) gemäß Anspruch 4 oder 5, wobei das Kugelscharnier (131, 132) ein an der Halterung (100, 115) befestigtes Gehäuse (132) und einen an der Anhängestange (104) befestigten Kugelkopf (131) aufweist, wobei das Gehäuse (132) mit einer oder mehreren Führungskanten (133) zum Führen der Schwenkbewegung des Kugelkopfs in dem Gehäuse versehen ist.

31. Anhängerkupplungsanordnung (101) gemäß Anspruch 30, wobei der Kugelkopf (131) mit der Anhängestange (104), bevorzugt an deren inneren Ende (105), mittels eines Verbindungsteils (130), wie etwa einer Stange, verbunden ist und das Gehäuse Führungskanten für das Verbindungsteil (130) aufweist.

32. Personenkraftwagen, welcher mit einer Anhängerkupplungsanordnung (1; 101) gemäß einem der vorhergehenden Ansprüche ausgestattet ist.

33. Personenkraftwagen gemäß Anspruch 32, welcher einen hinteren Querträger (100) aufweist, wobei die Halterung (15; 115) an dem hinteren Querträger angebracht ist.

34. Personenkraftwagen gemäß Anspruch 32 oder 33, wobei sich der Anhängekugelkopf (3; 103) in der zweiten Sekundärorientierung unterhalb des hinteren Querträgers (100) befindet.

## Revendications

1. Ensemble d'attelage de remorquage (1 ; 101) comprenant un organe d'attelage de remorquage (2 ; 102) comportant une tige d'attelage de remorquage (4 ; 104) et une rotule d'attelage de remorquage (3 ; 103), et un dispositif de retenue (100, 15 ; 115) destiné à l'organe d'attelage de remorquage, dans lequel le dispositif de retenue comprend des parties de retenue (100) qui doivent être fixement montées sur le véhicule, tel qu'une voiture de tourisme, dans lequel l'organe d'attelage de remorquage (2 ; 102) est relié au dispositif de retenue de manière à pouvoir tourner autour de plusieurs axes (S, T) pour un mouvement par rapport aux parties de retenue et au véhicule entre une orientation primaire dans laquelle la rotule d'attelage de remorquage (3 ; 103) a une position basse et au moins une première orientation secondaire et une deuxième orientation secondaire dans lesquelles la rotule d'attelage de remorquage a une position plus haute, l'ensemble comprenant en outre un dispositif de verrouillage pour verrouiller l'organe d'attelage de remorquage dans au moins ladite première orientation secondaire, dans lequel le dispositif de verrouillage est pourvu de moyens d'actionnement pour verrouiller et/ou déverrouiller le dispositif de verrouillage à la main, **caractérisé en ce que** lesdits plusieurs axes sont en intersection à un emplacement qui est immobile au niveau vertical au cours dudit mouvement, ledit dispositif de verrouillage étant situé entre l'extrémité intérieure de l'organe d'attelage de remorquage et la rotule d'attelage de remorquage, en particulier à un emplacement le long de la tige d'attelage de remorquage, dans lequel le dispositif de verrouillage (21 ; 121) comprend un premier moyen de verrouillage (12 ; 112) qui est fixé au dispositif de retenue, dans lequel le premier moyen de verrouillage comprend deux plaques (10 ; 110) fixement montées sur les parties de retenue, dans lequel les plaques laissent un passage libre vers le haut pour un mouvement de l'organe d'attelage de remorquage (2 ; 110) vers la première position secondaire et à l'écart de celle-ci, dans lequel l'organe d'attelage de remorquage (2 ; 102) est pourvu d'un deuxième moyen de verrouillage (7 ; 107), dans lequel l'ensemble est en outre pourvu d'un troisième moyen de verrouillage (21 ; 121) pour verrouiller le premier moyen de verrouillage et le deuxième moyen de verrouillage l'un à l'autre dans ladite première orientation secondaire de l'organe d'attelage de remorquage.

2. Ensemble d'attelage de remorquage (1 ; 101) selon la revendication 1, dans lequel l'organe d'attelage de remorquage (2 ; 102) est relié au dispositif de retenue (100) pour ledit mouvement d'une manière non motorisée, de préférence à la main ou par gravité.

3. Ensemble d'attelage de remorquage (101) selon la revendication 1 ou 2, dans lequel le dispositif de retenue (100 ; 115) comprend un organe de retenue (115) qui fait partie des parties de retenue (100) et qui doit être fixement monté sur le véhicule, et l'organe d'attelage de remorquage (2 ; 102) est attaché à l'organe de retenue au moyen d'une charnière (131, 132) ayant plusieurs axes (S, T) de rotation.

4. Ensemble d'attelage de remorquage (101) selon la revendication 3, dans lequel la charnière (131, 132) est une charnière à rotule.

5. Ensemble d'attelage de remorquage (101) selon la revendication 4, dans lequel la charnière à rotule (131, 132) est pourvue de bords de guidage (133) destinés à guider le mouvement de l'organe d'attelage de remorquage (102) au cours de son mouvement.

6. Ensemble d'attelage de remorquage (1 ; 101) selon l'une quelconque des revendications précédentes, dans lequel l'organe d'attelage de remorquage (2 ; 102) peut tourner par rapport aux parties de retenue (100) autour d'un premier axe (S) et autour d'au moins un deuxième axe (T) qui est à un angle par rapport au premier axe, dans lequel le premier axe (S) a une composante directionnelle vers le haut dominante, et est de préférence sensiblement vertical et dans lequel le deuxième axe (T) a une composante directionnelle horizontale dominante et est de préférence sensiblement horizontal.

7. Ensemble d'attelage de remorquage (101) selon la revendication 6, dans lequel il y a au moins deux deuxièmes axes (T), qui s'étendent transversalement l'un à l'autre.

8. Ensemble d'attelage de remorquage (1) selon la revendication 1, dans lequel le dispositif de retenue (100, 15) comprend un organe de retenue (15) qui peut tourner par rapport aux parties de retenue (100) autour d'un premier axe (S) et l'organe d'attelage de remorquage (2) peut tourner par rapport à l'organe de retenue (15) autour d'un deuxième axe (T) qui est à un angle par rapport au premier axe (S).

9. Ensemble d'attelage de remorquage (1) selon la revendication 8, dans lequel le premier axe (S) a une composante directionnelle vers le haut dominante, et est de préférence sensiblement vertical.

10. Ensemble d'attelage de remorquage (1) selon la revendication 8 ou 9, dans lequel le deuxième axe (T) a une composante directionnelle horizontale dominante et est de préférence sensiblement horizontal.

11. Ensemble d'attelage de remorquage (1) selon la revendication 8, 9 ou 10, dans lequel l'organe de retenue (15) est allongé et dans lequel l'axe de rotation (S) coïncide avec un axe longitudinal de l'organe de retenue allongé.

12. Ensemble d'attelage de remorquage (1 ; 101) selon l'une quelconque des revendications précédentes, dans lequel le dispositif de retenue (100, 15 ; 115) est pourvu d'un quatrième moyen de verrouillage (30 ; 151) agencé pour une coopération de verrouillage avec le deuxième moyen de verrouillage (7 ; 107) et de préférence le troisième moyen de verrouillage (21 ; 121) pour verrouiller le quatrième moyen de verrouillage et le deuxième moyen de verrouillage l'un à l'autre dans ladite deuxième orientation secondaire de l'organe d'attelage de remorquage, dans lequel, de préférence, le quatrième moyen de verrouillage fournit un moyen de positionnement pour l'organe d'attelage de remorquage dans sa deuxième orientation secondaire.

13. Ensemble d'attelage de remorquage (1 ; 101) selon la revendication 12, dans lequel le premier moyen de verrouillage (12 ; 112) et le quatrième moyen de verrouillage (30 ; 131) sont orientés sensiblement transversalement l'un à l'autre.

14. Ensemble d'attelage de remorquage selon la revendication 12 ou 13, dans lequel la première orientation secondaire et la deuxième orientation secondaire de l'organe d'attelage de remorquage sont sensiblement transversales l'une à l'autre.

15. Ensemble d'attelage de remorquage (1 ; 101) selon l'une quelconque des revendications 11 à 14, dans lequel le premier moyen de verrouillage (12 ; 112) et le quatrième moyen de verrouillage (30 ; 151) comprennent des trous et le troisième moyen de verrouillage comprend une goupille de verrouillage (21 ; 121) qui peut être insérée dans lesdits trous, dans lequel, de préférence, la barre d'attelage de remorquage (4 ; 104) est pourvue d'un trou formant le deuxième moyen de verrouillage.

16. Ensemble d'attelage de remorquage (1 ; 101) selon l'une quelconque des revendications précédentes, dans lequel l'organe d'attelage de remorquage (2 ; 102) est relié, de manière mobile, au dispositif de retenue à une extrémité intérieure (105) de l'organe d'attelage de remorquage.

17. Ensemble d'attelage de remorquage (1 ; 101) selon l'une quelconque des revendications précédentes, dans lequel, dans la première orientation secondaire, la rotule d'attelage de remorquage (3 ; 103) est située à un niveau supérieur à celui dans une deuxième orientation secondaire.

18. Ensemble d'attelage de remorquage (1 ; 101) selon l'une quelconque des revendications précédentes, dans lequel, dans sa première orientation secondaire, l'organe d'attelage de remorquage (2 ; 102) se trouve à sa position d'utilisation.

19. Ensemble d'attelage de remorquage (1 ; 101) selon l'une quelconque des revendications précédentes, dans lequel, dans sa deuxième orientation secondaire, l'organe d'attelage de remorquage (2 ; 102) se trouve à sa position de rangement.

20. Ensemble d'attelage de remorquage (1) selon l'une quelconque des revendications précédentes, dans lequel le dispositif de retenue (100, 15) est pourvu d'un organe de retenue (15), dans lequel l'organe de retenue est attaché au dispositif de retenue de manière à pouvoir tourner autour d'un axe de rotation (S), l'organe d'attelage de remorquage (2) à une extrémité intérieure de celui-ci étant attaché à l'organe de retenue (15) de manière à pouvoir basculer autour d'un axe de charnière (T) sensiblement transversal à l'axe de rotation (S).

21. Ensemble d'attelage de remorquage (1) selon la revendication 20, dans lequel l'organe de retenue (15) est allongé et dans lequel l'axe de rotation (S) coïncide avec un axe longitudinal de l'organe de retenue allongé.

22. Ensemble d'attelage de remorquage (1) selon la revendication 20 ou 21, dans lequel l'axe de charnière (T) et l'axe de rotation (S) sont en intersection.

23. Ensemble d'attelage de remorquage (1) selon la revendication 20, 21 ou 22, dans lequel, à la position d'utilisation, l'axe de rotation (S) est vertical.

24. Ensemble d'attelage de remorquage selon l'une quelconque des revendications 20 à 23, dans lequel l'axe de charnière (T) est sensiblement perpendiculaire à l'axe de rotation (S).

25. Ensemble d'attelage de remorquage (1 ; 101) selon l'une quelconque des revendications précédentes, dans lequel ledit dispositif de verrouillage (21 ; 121) comprend un trou (7 ; 107) dans l'organe d'attelage de remorquage et une goupille de verrouillage (21 ; 121) qui peut être insérée dans ledit trou.

26. Ensemble d'attelage de remorquage selon la revendication 25, dans lequel le dispositif de verrouillage (21 ; 121) comprend un organe de verrouillage (10 ; 150) fixement attaché au véhicule et pourvu d'un trou (12 ; 112) pour le passage de la goupille de verrouillage.

27. Ensemble d'attelage de remorquage (1 ; 101) selon la revendication 25 ou 26, dans lequel le dispositif de verrouillage est situé entre l'extrémité intérieure de l'organe d'attelage de remorquage et la rotule d'attelage de remorquage.

28. Ensemble d'attelage de remorquage (1 ; 101) selon la revendication 25, 26 ou 27, dans lequel lesdits plusieurs axes (S, T) sont en intersection à un emplacement qui est immobile au niveau vertical au cours dudit mouvement.

29. Ensemble d'attelage de remorquage (101) selon l'une quelconque des revendications précédentes, dans lequel la liaison entre l'organe d'attelage de remorquage (102) et le dispositif de retenue (115) est une charnière de rotule.

30. Ensemble d'attelage de remorquage (101) selon la revendication 4 ou 5, dans lequel la charnière de rotule (131, 132) comporte un logement (132) fixé au dispositif de retenue (100, 115) et une rotule (131) montée sur la tige d'attelage de remorquage (104), dans lequel le logement (132) est pourvu d'un ou plusieurs bords de guidage (133) pour guider le mouvement de basculement de la rotule dans le logement.

31. Ensemble d'attelage de remorquage (101) selon la revendication 30, dans lequel la rotule (131) est reliée à la barre d'attelage de remorquage (104), de préférence à l'extrémité intérieure (105) de celle-ci, par un connecteur (130), comme une tige, et le logement comporte des bords de guidage pour le connecteur (130).

32. Voiture de tourisme pourvue d'un ensemble d'attelage de remorquage (1 ; 101) selon l'une quelconque des revendications précédentes.

33. Voiture de tourisme selon la revendication 32, comprenant une traverse arrière (100), dans laquelle le dispositif de retenue (15 ; 115) est attaché à la traverse arrière.

34. Voiture de tourisme selon la revendication 32 ou 33, dans laquelle, dans la deuxième orientation secondaire, la rotule d'attelage de remorquage (3 ; 103) est située au-dessous de la traverse arrière (100).
